# EUROPEAN PATENT APPLICATION

(11) **EP 2 661 079 A1**
(43) Date of publication of application: **06.11.2013**
(21) Application number: 10861264.9
(22) Date of filing: 31.12.2010
(51) Int. Cl.: H04N 7/26

(54) **H264 TRANSCODING METHOD BY MULTIPLEXING CODE STREAM INFORMATION**

(71) Applicant: Beijing Goland Tech Co., Ltd., Beijing 100190 (CN)
(72) Inventor: FENG, Tao, Beijing 100190 (CN); ZHANG, Yanding, Beijing 100190 (CN); YANG, Dong, Beijing 100190 (CN)
(74) Representative: Nordic Patent Service A/S
(86) International application number: PCT/CN2010/002244
(87) International publication number: WO 2012/088649

(57) **Abstract**

The present invention discloses a method for H264 transcoding with code stream information reuse, characterized in that, before encoding, a frame or field that is decoded from the original code stream is counted, and the current output of the frame or field is marked with the count value; during encoding, the slice type of the current frame or field that is encoded from an encoder is consistent with that of the original code stream; when encoding the code stream information at macroblock level, the code stream information at macroblock level of the original code stream is reused. The present invention increases the encoding speed and enhances the encoding efficiency without losing too much video quality.

## Description

### Technical Field

The present invention relates to the field of multimedia encoding technology, in particular to a method for H264 transcoding with code stream information reuse.

### Background Art

The demands for video backups and storage are increasing with the development of network sharing and multimedia technology, which speeds up the development of transcoding technology. However, due to the huge amount of calculations for video encoding, the transcoding process has an extremely high requirement for hardware and software. Generally, the transcoding algorithms decode the original video stream and then perform re-coding, which involves a very large amount of calculations and requires a longer time because of the complexity of the related algorithms. Since all of the current standards for video encoding and decoding are based on the basic framework of transcoding and motion compensation, the prior information such as movement levels and image details of the relevant video stream can be obtained from the information of motion vector and macroblock in the original code stream. If the prior information is utilized in the encoding process, the recoding speed can be greatly improved without losing too much picture quality.

Current main standards for video encoding such as VC-1, MPEG2, MPEG4 and H26L are all based on a hybrid encoding frame including coding transformation, motion estimation and entropy encoding. The existing method for converting H264 code stream into H264 code stream generally comprises the steps as follows: firstly, decoding a YUV image sequence from the image of the original code stream; passing the YUV image sequence to an encoder according to a broadcasting order; analyzing each image by using an encoder to determine the type of the slice of the image code; analyzing the motion condition and detail complexity of respective macroblocks in the slice to determine the type of the macroblock and the magnitude of the motion vector; then performing encoding. The selection of encoding method mostly suitable for the current macroblock and the searching of the mostly matching reference positions for Inter macroblocks among various modes etc. involve a considerably great computation load due to the complexity of the H264 standard, for example, there are a plurality of types of macroblocks, there are four prediction ways for Intra_16X16, there are eight prediction ways for Intra_4X4, and the motion estimation of Inter blocks supports 1/4 pixel precision which requires a large number of interpolation operations, etc.

### Contents of the Invention

The technical problem to be solved by the present invention is how to realize a transcoding process quickly and efficiently without losing too much picture quality.

In order to solve the above technical problems, the present invention provides a method for H264 transcoding with code stream information reuse. During the decoding process, a frame or field that is decoded from the original code stream is counted, and the current output of the frame or field is marked with the count value; during the encoding process, the current frame or field is encoded by using an encoder to have the same slice type with that of each frame or field of the original code stream; when encoding the code stream information at macroblock level, the original code stream information at macroblock level is reused.

Wherein, the step in which the current frame or field is encoded to have the same slice type with that of the original code stream by an encoder comprises:
S 11: inputting NAL;
S12: determining whether nal unit_type of NAL equals to 5; if so, encoding all slices of the current frame or field as IDR-slices; if not, proceeding with step S13;
S13: if the type of the slice of the frame or field of the original code stream is I slice, encoding the slice of the current frame or field as I slice; if the type of the slice of the frame or field of the original code stream is P slice, encoding the slice of the current frame or field as P slice; if the type of the slice of the frame or field of the original code stream is B slice, further determining whether nal_ref_idc equals to 0, if so, encoding the slice of the current frame or field as B slice, if not, encoding the slice of the current frame or field as B slice and inserting the current frame or field, as a reference , into queue of reference frame of the encoder.

Wherein, the original code stream information at macroblock level is reused through the following steps:
S21: determining whether there is any error in the original code stream; if so, it means that the decoder failed to decode the current macroblock, then the decoder marks the current macroblock as having error and the encoder analyzes the macroblock through an existing motion estimation and prediction mode selection algorithm; if not, proceeding with step S22;
S22: if the current macroblock is an Intra macroblock, performing encoding according to a prediction mode of the macroblock at a corresponding position of the original code stream after pre-processing, the pre-processing comprises:
   S221: if the current macroblock is a DC prediction mode of Intra_4X4_DC, Intra_16X16_DC or Intra_8X8_DC, encoding the current macroblock or block as a corresponding DC prediction mode;
   S222: if the current macroblock is other Intra-frame prediction modes, calculating mbAddrA, mbAddrB and mbAddrC of the current encoding macroblock and the block thereof, and determining whether the availability attributes of the above mbAddrA, mbAddrB and mbAddrC are as same as the corresponding positions of the original code stream, if not, deleting the predictions in the unavailable directions; if neither of the directions is available, a DC prediction is used.
S23: if the current macroblock is an inter macroblock, the information at macroblock level will be reused by the following steps:
   S231: processing the types of the macroblock; if the current macroblock of the original code stream is P_SKIP, the decoder marks the type as P_L0_16X16, and the motion vector is the median prediction of the decoder; if the current macroblock of the original code stream is B_SKIP, the decoder marks the type as B_DIRECT, and the other inter types remain unchanged to be output to the encoder;
   S232: the decoder passes the count value of the reference frame corresponding to ref_idx_lx of 8X8 block of every saved macroblock to the encoder, and the encoder searches a frame or field with the same count value from the queue of reference frame of the encoder after obtaining the count value of the reference frame of 8X8 block; if it exists, regarding it as the reference frame to proceeding with step S233; otherwise, estimating the whole macroblock by means of an existing motion estimation process of the encoder;
   S233: reusing the motion information of the inter macroblock;
S24: outputting the macroblock after encoding.

Wherein, in the step S233, the motion information of the inter macroblock is reused by the following ways:
taking the motion vector of the corresponding macroblock of the original code stream as one of the initial prediction vectors of the encoder, and comparing it with the motion vectors obtained by the median prediction and by other ways through existing matching standards of the encoder, to obtain the position of an initial search point for initial searching;
reusing a full-pixel part of the magnitude of the motion vector, the reference frame of the motion vector, the macroblock type, the block mode and the reference frame index of corresponding macroblock of the original code stream, then the encoder takes an integral point of the motion vector as the initial search point to perform a subpixel and quarter pixel searching, to obtain an ultimate matching position;
directly reusing the motion vector, the block mode, the reference frame index and the macroblock type of macroblock of the original code stream, and calculating a residual difference.

The present invention increases the encoding speed and enhances the encoding efficiency without losing too much video quality by reusing the original code stream at frame or field level and macroblock level.

### Brief Description of the Drawings

Fig. 1 is a schematic block diagram of the encoding of the H264 encoder;
Fig. 2 is a flow chart illustrating the process of encoding the type of the slice during a reuse at frame or field level in the method for H264 transcoding with code stream information reuse according to an embodiment of the present invention;
Fig. 3 is a stream chart illustrating the process of reuse at macroblock level in the method for H264 transcoding with code stream information reuse according to an embodiment of the present invention.

### Specific Mode for Carrying Out the Invention

Hereinafter, the embodiments of the present invention will be described in further details in combination with drawings and examples. The embodiments below are used for describing the present invention only, but not for limiting the scope thereof.

In the conversion process of the present invention, if the transcoding output and the resolution of the image sequence of the original code stream are unchanged, the prior information at frame or field level, slice level and macroblock level in the original code stream which are relevant to the inherent properties of an image, such as the motion degree of video sequence, the precision of details, are utilized. Such information is used to reduce the time for analysis at macroblock level, to accelerate the recoding process, and to keep the efficiency loss of compression relatively smaller. Considering the concision of description, hereinafter the term "frame" is used for representing "frame" and "field" both. In the following, the present invention will be further described mainly by taking the transcoding from H264 to H264 as examples.

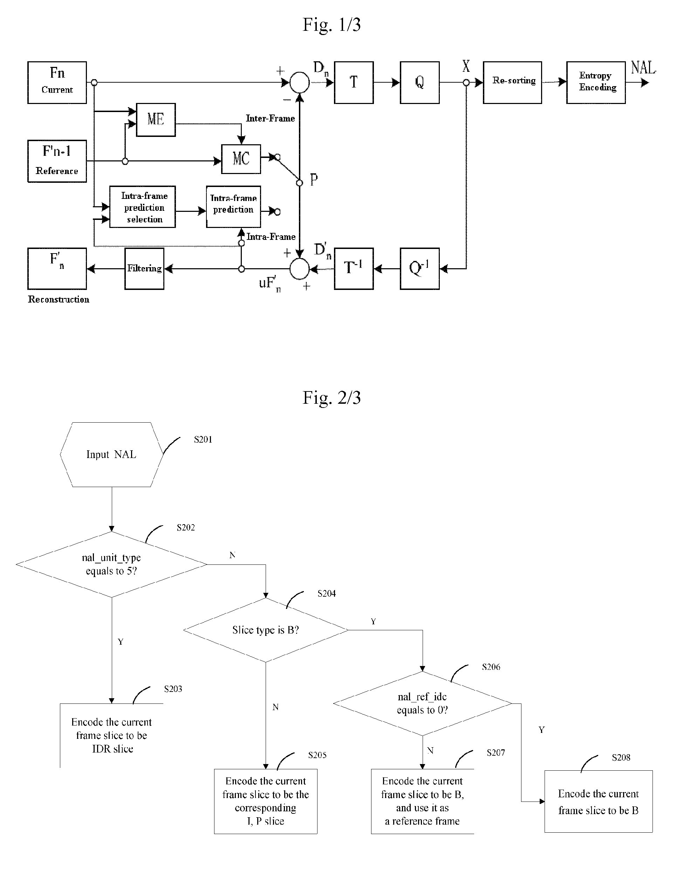

As shown in Fig. 1, it is a block diagram illustrating the encoding process of the H264 encoder. The method of the present invention reuses the ME (motion estimate, i.e. the inter macroblock information), Intra prediction selection and code stream information of Intra-frame prediction part for encoding, and processes the frame index of the decoder; other parts such as MC (motion compensation), T (DCT) and Q (quantification) are all encoded according to encoding methods of prior art.

During the decoding process, a frame that is decoded from the original code stream is counted, and the current output frame is marked with the count value. During the encoding process, since the information of the original code stream at macroblock level is to be reused, the slice type of every frame of the image of the encoder must be consistent with that of the original code stream, otherwise it would be impossible to reuse the information of motion vector of Inter macroblock and so on. The encoder encodes the slice type of the current frame to be consistent with that of the original code stream. When encoding the code stream information at macroblock level, the code stream information of the original code stream at macroblock level is reused.

The step in which the slice type of the current frame is encoded by the encoder to be consistent with that of the original code stream is shown as figure 2, which comprises:
Step S201, inputting NAL.
Step S202, determining whether nal_uni_type of NAL equals to 5; if so, proceeding with step S203; if not, proceeding with step S204.
Step S203, encoding all slices of the current frame as IDR slices.
Step S204, determining whether the type of the slice of the frame of the original code stream is B slice; if yes, proceeding with step S206; if not, proceeding with step S205.
Step S205, if the type of the slice of the frame of the original code stream is I slice, encoding the slice of the current frame as I slice; if the type of the slice of the frame of the original code stream is P slice, encoding the slice of the current frame as P slice.
Step S206, determining whether nal_ref_idc equals to 0; if yes, proceeding with step S208; otherwise, proceeding with step S207.
Step S207, encoding the slice of the current frame as B slice, and inserting the current frame, as a reference frame, into a queue of reference frame of the encoder.
Step S208, encoding the slice of the current frame as B slice.

The encoder can not reuse the relevant information such as ref_pic_list_modification_flag_lx, adaptive_ref_pic marking mode_flag, memory_management_control_operation for adjusting the arrangement order of the reference frame sequence and for adjusting the adjustment ways for the reference frame sequence in the original H264 code stream (References: ITU-T H264 Advanced video coding for generic audiovisual services, 8.2.5.1); if ref_idx_lx of the code stream information at macroblock level is simply reused when encoding the Inter macroblock, the frames to which the encoder refers will not be those to which the corresponding macroblock of the original code stream refers, at this time, what is obtained is not the optimal matching position of the motion vector in the original code stream; therefore the first frame decoded from the original code stream is counted as 0, and the current output frame is marked with the count value, meanwhile the macroblock level needs to be processed correspondingly when transferring the reference frame index.

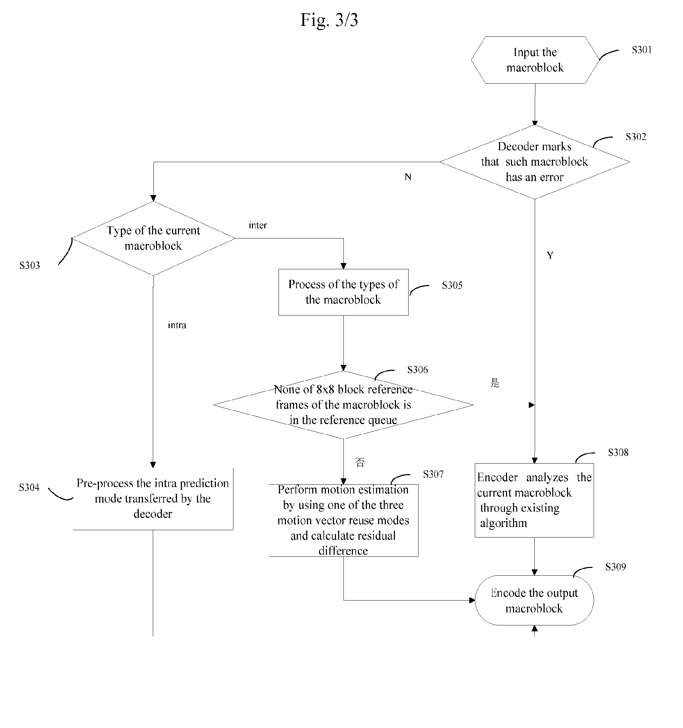

The flow chart illustrating the process of reusing the code stream information at macroblock level of the original code stream is shown as figure 3, which comprises:
Step S301: inputting the macroblock of the current frame, that is, the macroblock of the current code when encoding a frame.
Step S302: determining whether there is any error in the original code stream; if so, it means that the decoder failed to decode the current macroblock, then the decoder marks the current macroblock as having an error, and proceeding with step S308; if not, proceeding with step S303.
Step S303: determining the type of the current macroblock; if it is an Intra macroblock, proceeding with step S304; otherwise, proceeding with step S305.
Step S304: pre-processing the current macroblock, and performing encoding process according to the prediction mode of the macroblock at a corresponding position of the original code stream after pre-processing; wherein the pre-processing comprises:
   if the current macroblock has a DC prediction mode of Intra_4x4_DC, Intra_16x16_DC or Intra_8x8_DC, encoding the current macroblock or block to have a corresponding DC prediction mode. This requires to calculate the prediction value by using three standard methods (References: ITU-T H264 Advanced video coding for generic audiovisual services, 8.3.2.2.4) according to the claissification of the slice of the current frame of the encoder.
   if the current macroblock has other Intra-frame prediction modes, calculating mbAddrA, mbAddrB and mbAddrC of the macroblock being encoded and the block thereof; determining whether the availability attribute of the above mbAddrA, mbAddrB and mbAddrC are as same as the corresponding positions of the original code stream, if not, deleting the predictions in the unavailable directions; if neither of the directions is available, a DC prediction is used.
Step S305: at this time, the macroblock is an Inter macroblock, the type of the Inter macroblock is processed; if the current macroblock of the original code stream is P_SKIP, the decoder marks the type as P_L0_16X16, and the motion vector is the one of a median prediction of the decoder; if the current macroblock of the original code stream is B_SKIP, the decoder marks the type as B_DIRECT; and other Inter types remain unchanged to be output to the encoder.
Step S306: the decoder passes the count value of corresponding reference frame of ref_idx_lx of 8x8 block of every saved macroblock to the encoder, and the encoder searches a frame with the same count from the queue of reference frame of the encoder after obtaining the count value of the reference frame of 8x8 block; if it exists, regarding it as the reference frame to proceed with step S307; if not, estimating the whole macroblock (inter macroblock) by means of an existing motion estimation process of the encoder, that is, step S308.
Step S307: reusing the motion information of the Inter macroblock, comprising;
   taking the motion vector of the corresponding macroblock of the original code stream as one of the initial prediction vectors of the encoder, and comparing it with the motion vector obtained by the median prediction and by other ways through existing matching standards of the encoder, to obtain the position of an initial search point for an initial searching;
   reusing a full-pixel part of the magnitude of the motion vector, the reference frame of the motion vector, the macroblock type, the block mode and the reference frame index of the corresponding macroblock of the original code stream, then the encoder takes an integral point of the motion vector as the initial search point to erform a subpixel and quarter pixel searching, to obtain an ultimate matching position;
   directly reusing the motion vector, the block mode, the reference frame index and the macroblock type of the macroblock of the original code stream, and calculating a residual difference;
step S308: the encoder analyzes the current macroblock, that is, analyzes the motion estimation and the prediction mode selection in figure 1, through existing algorithms.
step S309: outputting the macroblock after encoding.

The transcoding method with code stream information reuse of the present invention is also applicable to the encoding process of VC-1, MPEG2 and MPEG4, etc. which are all based on the hybrid encoding framework of conversion encode and motion estimation. Although there is a considerable difference between the former and the H264 standard in such as DCT conversion and macroblock mode, the motion vector of the macroblock of the former can be regarded as one of the prediction vectors during H264 motion estimation, to predict the initial search point of the motion estimation.

Simulation tests are conducted for both of the transcoding method of the present invention and the existing encoding method, and the results are compared in the following:
The simulation can be conducted under Windows7, Intel (R) Core (TM) 2 Duo CPU E8500 @ 3.16 GHz, memory 4GB, the decoder can be ffmpeg, and the encoder can be x264, to simulate the algorithm. Table 1 shows the testing results of Test 1 by using the method according to the present invention while Table 2 shows the testing results of Test 2 by using a full decoding and encoding method in the prior art. Both of Test 1 and Test 2 use the same ffmpeg decoder, the same x264 parameters configuration and the same test source. Test 1 reuses the prior information of original code stream from frame level to macroblock level, and the reuse of the motion vector takes the way c, in which no encoding mode analysis or motion estimation for macroblock is conducted. Test 2 utilizes default analysis and estimation processes of x264. Table 1 and Table 2 show comparisons between PSNR (peak signal to noise ratio) and time cost for the two tests.

**Table 1. the test results of the H264 transcoding method with code stream information reuse according to the present invention**

| Test Source | PSNR/dB | | | TIME/second |
|---|---|---|---|---|
| | Y | U | V | |
| BraveHeart_F6_D1 | 55.99 | 57.97 | 56.98 | 81 |
| AVATAR_CN | 65.05 | 66.13 | 67.48 | 71 |
| National_Treasure_2 | 53.71 | 56.14 | 55.96 | 67 |
| Transformers | 51.10 | 52.70 | 52.10 | 69 |
| Xmen3 | 50.56 | 52.56 | 52.91 | 154 |

**Table 2. the test results of the transcoding method in prior art**

| Test Source | PSNR/dB | | | TIME/second |
|---|---|---|---|---|
| | Y | U | V | |
| BraveHeart_F6_D1 | 56.46 | 57.59 | 56.94 | 274 |
| AVATAR_CN | 65.41 | 66.22 | 67.23 | 248 |
| National_Treasure_2 | 53.75 | 55.86 | 55.71 | 257 |
| Transformers | 51.22 | 52.45 | 51.86 | 257 |
| Xmen3 | 51.11 | 52.95 | 53.15 | 563 |

The above embodiments are only used for describing the present invention, but not for limiting the extent of scope thereof. Without departing from the spirit and scope of the present invention, a person skilled in the art can also make various changes and modifications thereto. Therefore all equivalent technical solutions should be regarded as falling within the scope of the present invention defined by the appended claims.

### Industrial Applicability

The present invention increases the encoding speed and enhances the encoding efficiency without losing too much video quality, by reusing original code stream at frame or field level and at macroblock level.

## Claims

1. A method for H264 transcoding with code stream information reuse, comprising,
during the decoding process, a frame or field that is decoded from an original code stream is counted, and a current output of the frame or field is marked with a count value;
during the encoding process, by an encoder, the type of the slice of the current frame or field is encoded to be consistent with that of the slice of each frame or field of the original code stream;
when encoding the code stream information at macroblock level, the code stream information at macroblock level of the original code stream is reused.

2. The method for H264 transcoding with code stream information reuse of claim 1, **characterized in that**, by the encoder, the type of the slice of the current frame or field is encoded to be consistent with that of the original code stream through the following steps:
S 11: inputting NAL;
S12: determining whether nal unit_type of NAL equals to 5; if so, encoding all slices of the current frame or field as IDR slices; if not, then carry out step S13;
S13: if the type of the slice of the frame or field of the original code stream is I slice, encoding the slice of the current frame or field as I slice; if the type of the slice of the frame or field of the original code stream is P slice, encoding the slice of the current frame or field as P slice; if the type of the slice of the frame or field of the original code stream is B slice, determining whether nal_ref_idc equals to 0; if yes, encoding the slice of the current frame or field as B slice; if not, encoding the slice of the current frame or field as B slice and inserting the current frame or field as a reference into queue of reference frame of the encoder.

3. The method for H264 transcoding with code stream information reuse of claim 2, **characterized in that**, the code stream information at macroblock level of the original code stream is reused through the following steps:
S21: determining whether there is any error in the original code stream; if yes, it means that the decoder failed to decode the current macroblock , then the decoder marks the current macroblock as having an error, and the encoder analyzes the macroblock through existing motion estimation and prediction mode selection algorithms; if not, proceeding with step S22;
S22: if the current macroblock is an Intra macroblock, performing encoding according to a prediction mode of the macroblock at a corresponding position of the original code stream after pre-processing, the pre-processing comprises:
S221: if the current macroblock has a DC prediction mode of Intra_4X4_DC, Intra_16X16_DC or Intra_8X8_DC, encoding the current macroblock or block to have a corresponding DC prediction mode;
S222: if the current macroblock has other Intra-frame prediction modes, calculating mbAddrA, mbAddrB and mbAddrC of the macroblock being encoded and the block thereof, and determining whether the availability attribute of the above mbAddrA, mbAddrB and mbAddrC are the same as the corresponding positions of the original code stream, if not, deleting the predictions in the unavailable directions; if neither of the directions is available, a DC prediction is used
S23: if the current macroblock is an Inter macroblock, the information at macroblock level will be reused as the following steps:
S231: processing the types of the macroblock: if the current macroblock of the original code stream is P_SKIP, the decoder marks the type as P_L0_16X16, and the motion vector is the one of a median prediction of the decoder; if the current macroblock of the original code stream is B_SKIP, the decoder marks the type as B_DIRECT, and the other inter types remain unchanged to be output to the encoder;
S232: the decoder passes the count value of the reference frame corresponding to ref_idx_lx of 8X8 block of every saved macroblock to the encoder, and the encoder searches a frame or field with the same count value from the queue of reference frame of the encoder after obtaining the count value of the reference frame of 8X8 block; if it exists, regarding it as the reference frame to proceed with step S233; otherwise, estimating the whole macroblock by means of an existing motion estimation process of the encoder;
S233: reusing the motion information of the Inter macroblock;
S24: outputting the macroblock after encoding.

4. The method for H264 transcoding with code stream information reuse of claim 3, **characterized in that**, in the step S233, the motion information in the Inter macroblock is reused as the following ways:
taking the motion vector of corresponding macroblock of the original code stream as one of the initial prediction vectors of the encoder, and compare it with the motion vector obtained by the median prediction and by other ways using the existing matching standards of the encoder, to obtain the position of an initial search point for an initial searching;
reusing a full-pixel part of the magnitude of the motion vector, the reference frame of the motion vector, the macroblock type, the block mode and the reference frame index of corresponding macroblock of the original code stream, then the encoder takes an integral point of the motion vector as the initial search point to perform a subpixel and a quarter pixel searching, to obtain an ultimate matching position;
directly reusing the motion vector, the block mode, the reference frame index and the macroblock type of the macroblock of the original code stream, and calculating a residual difference.
